# EUROPÄISCHE PATENTANMELDUNG

(11) **EP 2 233 776 A2**
(43) Veröffentlichungstag der Anmeldung: **29.09.2010**
(21) Anmeldenummer: 10151971.8
(22) Anmeldetag: 28.01.2010
(51) Int. Cl.: F16F 9/46

(54) **Dämpfer**

(30) Priorität: 24.03.2009 DE 102009001774
(71) Anmelder: Robert Bosch GmbH, 70442 Stuttgart (DE)
(72) Erfinder: Kurz, Edgar, 74081 Heilbronn-Horkheim (DE)

(57) **Zusammenfassung**

Die Erfindung betrifft einen Dämpfer (10) mit einem Dämpferzylinder (12), einer Kolbeneinheit (14), die einen in dem Dämpferzylinder (12) über eine Kolbenstange (16) geführten Kolbenstempel (18) umfasst, einer innerhalb des Dämpferzylinders (12) angeordneten Durchflusseinrichtung (20) zum Durchfluss eines Dämpferfluidstroms und einer innerhalb des Dämpferzylinders (12) angeordneten Verstelleinrichtung (22) zur Regelung des Dämpferfluidstroms in der Durchflusseinrichtung (20) mit einer Schiebereinheit (28), die Mittel (30, 30a, 30b) zur Umwandlung von Bewegungen umfasst. Erfindungsgemäß ist die Schiebereinheit (28) derart ausgeführt, dass eine Trennung des Dämpferfluidstroms und den Mitteln (30, 30a, 30b) zur Bewegungsumwandlung erfolgt.

## Beschreibung

### Stand der Technik

Die Erfindung geht aus von einem Dämpfer nach der Gattung des unabhängigen Patentanspruchs 1.

In der Offenlegungsschrift DE 10 2007 025 966 A1 wird ein Dämpfer für ein Fahrzeug beschrieben. Der beschriebene Dämpfer umfasst einen mit einem Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Zur Regelung des Dämpferfluidstroms in der Durchflusseinrichtung ist eine Verstelleinrichtung mit einer Schiebereinheit vorgesehen, die Mittel zur Umwandlung von Bewegungen umfasst. Üblicherweise wird der Dämpfer bei seiner Herstellung einmalig mit Dämpferfluid befüllt, welches über die gesamte Lebensdauer des Dämpfers in der einen geschlossenen Kreislauf bildenden Durchflusseinrichtung umläuft.

### Offenbarung der Erfindung

Der erfindungsgemäße Dämpfer mit den Merkmalen des unabhängigen Patentanspruchs 1 hat demgegenüber den Vorteil, dass die Schiebereinheit derart ausgeführt ist, dass eine Trennung von Dämpferfluidstrom und Mitteln zur Bewegungsumwandlung erfolgt. Üblicherweise sind im Dämpferfluidstrom auch störende Partikel, wie beispielsweise Schmutz und/oder Späne, enthalten. In vorteilhafter Weise werden durch die erfindungsgemäße Schiebereinheit die gegenüber Schmutz und Spänen sensiblen beweglichen Komponenten der Verstelleinheit des Dämpfers vor Bearbeitungsrückständen aus der Einzelteilefertigung und vor Spänen geschützt. Dies ist besonders bei einem Stoßdämpfer wichtig, da dieser üblicherweise bei seiner Herstellung einmalig mit Dämpferfluid befüllt wird, welches über die gesamte Lebensdauer des Dämpfers in der bevorzugt einen geschlossenen Kreislauf bildenden Durchflusseinrichtung umläuft. Das bedeutet, dass die Verunreinigungen nicht durch stetigen oder zyklischen Fluidwechsel entfernt werden, wie das beispielsweise bei Kraftstoffförderanlagen oder Bremsanlagen der Fall ist. Im Vergleich zum aktuellen Stand der Technik können aufgrund der erfindungsgemäßen Schiebereinheit die Anforderungen an Sauberkeit und Spänefreiheit der Dämpferkomponenten stark reduziert werden und die Robustheit gegenüber Störungen im Betrieb kann generell deutlich gesteigert werden. In vorteilhafter Weise sind hierdurch eine störungsfreie Funktion und eine wesentlich längere Lebensdauer des Dämpfers gewährleistet.

Durch die in den abhängigen Ansprüchen aufgeführten Maßnahmen und Weiterbildungen sind vorteilhafte Verbesserungen des im unabhängigen Patentanspruch 1 angegebenen Dämpfers möglich.

In einer Ausgestaltung des erfindungsgemäßen Dämpfers bildet die Schiebereinheit mit einem Antriebsgehäuse des Kolbenstempels einen im Wesentlichen geschlossenen Raum zur Aufnahme der Mittel zur Bewegungsumwandlung. In einer weiteren Ausgestaltung des erfindungsgemäßen Dämpfers weist der Raum ein durch einen Boden und eine umlaufende Wandung begrenztes Aufnahmevolumen auf, welches durch einen Deckel abgedeckt wird. Hierdurch arbeiten die Mittel zur Umwandlung von Bewegungen nicht direkt im Dämpferfluidstrom. In vorteilhafter Weise ist somit die Freigängigkeit der funktionswichtigen beweglichen Teile der Verstelleinrichtung des Dämpfers sichergestellt, indem im Dämpferfluidstrom vorhandene Fremdkörper beziehungsweise Partikel keine störende Wirkung haben. Die beweglichen Teile des Dämpfers, wie beispielsweise die Schiebereinheit, d.h. eine Verzahnung zwischen einem Zahnradsegment und der Schiebereinheit, laufen nur in einem im Wesentlichen partikelfreien Raum. In vorteilhafter Weise wird durch die erfindungsgemäße Ausgestaltung verhindert, dass Bearbeitungsrückstände aus der Stoßdämpfer-Komponentenfertigung oder im Betrieb des Dämpfers abgelöste Späne in die beweglichen Teile der Verstelleinheit des Dämpfers geschwemmt werden und diese blockieren. Somit können die Anforderungen an die Sauberkeit und an das Handling in der Fertigung stark reduziert werden.

In einer weiteren Ausgestaltung des erfindungsgemäßen Dämpfers sind das Aufnahmevolumen mindestens teilweise durch die Schiebereinheit und der Deckel mindestens teilweise durch das Antriebsgehäuse gebildet. In vorteilhafter Weise ist hierdurch auf konstruktiv einfache Weise ohne zusätzlichen Bauteilaufwand ein geschlossener Hohlraum gebildet, der die beweglichen Teile der Verstelleinheit des Dämpfers sicher vor im Dämpferfluidstrom enthaltenen Verunreinigungen schützt.

In vorteilhafter Weise weist der Dämpfer eine Dichteinheit auf, die zwischen der Schiebereinheit und der Durchflusseinrichtung wirkt. Hierdurch ergibt sich eine verbesserte Trennung von Dämpferfluidstrom und den Mitteln zur Umwandlung von Bewegungen im Betrieb des Dämpfers. Die kontinuierliche Trennung erlaubt es, kostentreibende Anforderungen an die Partikelfreiheit in der Dämpferfertigung zu reduzieren und stattdessen mit branchenüblichen Dämpferstandards zu arbeiten.

In einer Ausgestaltung des erfindungsgemäßen Dämpfers ist die Dichteinheit in einer zwischen der Schiebereinheit und dem Antriebsgehäuse verlaufenden Kontaktfläche angeordnet. Hierdurch ergibt sich eine Dichteinheit, welche der Bewegung der Schiebereinheit in besonders vorteilhafter Weise folgen kann, so dass eine sichere Abschirmung der gegenüber Schmutz und Spänen sensiblen Feinverzahnung der Mittel zur Umwandlung von Bewegungen erfolgt. Somit können im Vergleich zum aktuellen Dämpferstandard die Anforderungen an die Dämpferkomponenten hinsichtlich Sauberkeit und Spänefreiheit in vorteilhafter Weise stark reduziert werden. Insbesondere ergibt sich hierdurch eine Robustheit gegenüber Störungen im Betrieb des Dämpfers.

In einer weiteren Ausgestaltung des erfindungsgemäßen Dämpfers ist die Dichteinheit als umlaufende Dichtung ausgebildet und umfasst mindestens ein Dichtelement. In vorteilhafter Weise gleitet die Dichteinheit bzw. das Dichtelement während der Bewegung der Schiebereinheit entlang der Unterseite des Antriebsgehäuses und schützt so die empfindliche Verzahnung der Mittel zur Umwandlung von Bewegungen vor den im Dämpferfluidstrom enthaltenen Schmutzpartikeln. Die Schmierung der gleitenden Dichteinheit bzw. des gleitenden Dichtelementes ist durch den Verbau in der Durchflusseinrichtung gewährleistet. Die im Vergleich zu aktuellen Dämpferstandards unempfindliche Konstruktion erlaubt es, auf kostentreibende Prozesse für Komponentenreinigung und Medienfilterung zu verzichten und stattdessen mit Stoßdämpfer-branchenüblichen Standards zu arbeiten.

Im erfindungsgemäßen Dämpfer umfasst die Dichteinheit mindestens ein Dichtelement, welches an die Schiebereinheit und/oder das Antriebsgehäuse angespritzt ist, und/oder mindestens ein Dichtelement, welches in eine in der Schiebereinheit und/oder in dem Antriebsgehäuse angeordnete Nut eingelegt ist. Ein wesentlicher Vorteil besteht in der einfachen Herstellung und im geringen Platzbedarf der Dichteinheit und der dadurch erreichten Kostenersparnis.

Besonders vorteilhaft ist, dass die Schiebereinheit als Verschiebeelement ausgebildet ist, das in einer Ausnehmung des Antriebsgehäuses verschiebbar geführt ist. In vorteilhafter Weise ergibt sich hierdurch eine prozesssichere Zwangsführung der Schiebereinheit, wodurch sich eine sichere Abdichtung zwischen Schiebereinheit und Antriebsgehäuse ergibt.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Schnittdarstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt eine Draufsicht auf ein Ausführungsbeispiel des Kolbenstempels mit einem Stempelrohr und einem in dem Stempelrohr angeordneten Antriebsgehäuse.
Figur 3 zeigt eine perspektivische Darstellung des Antriebsgehäuses mit einer Durchflusseinrichtung und einer Verstelleinrichtung, die eine Federpaketeinheit und eine Schiebereinheit aufweist.
Figur 4 zeigt eine perspektivische Darstellung der Verstelleinrichtung mit der Federpaketeinheit und der Schiebereinheit, wobei eine Dichteinheit vorgesehen ist, die zwischen der Schiebereinheit und der Durchflusseinrichtung wirkt.

### Ausführungsformen der Erfindung

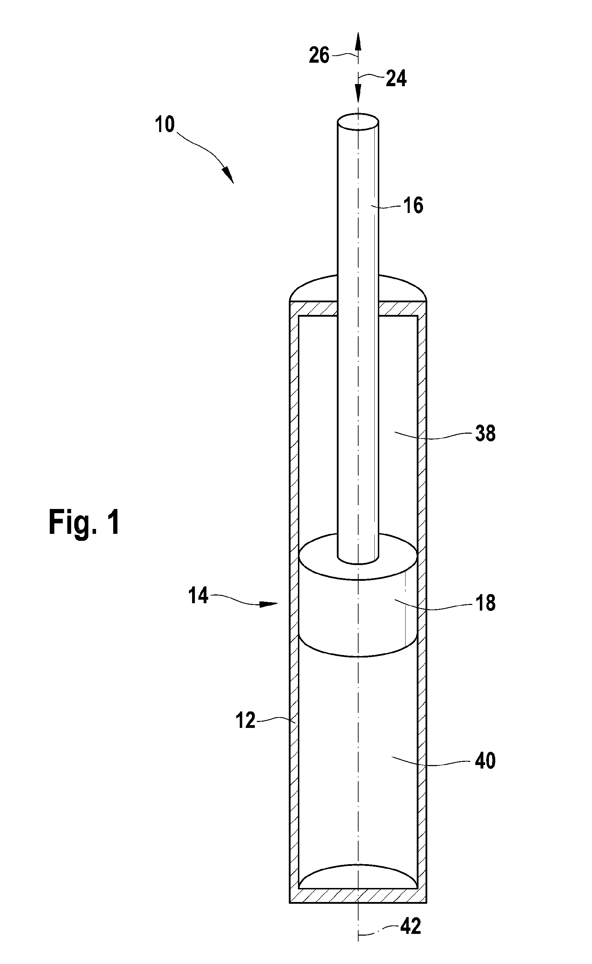

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und einen Kolbenstempel 18 umfasst, wobei der Kolbenstempel 18 über die Kolbenstange 16 in dem Dämpferzylinder 12 geführt wird. Der Kolbenstempel 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit des Kolbenstempels 18 gegenüber dem Dämpferzylinder 12 muss das Dämpferfluid durch eine innerhalb des Dämpferzylinders 12 angeordnete Durchflusseinrichtung 20 fließen, die vorzugsweise zwei Durchflusskanäle 20a, 20b aufweist.

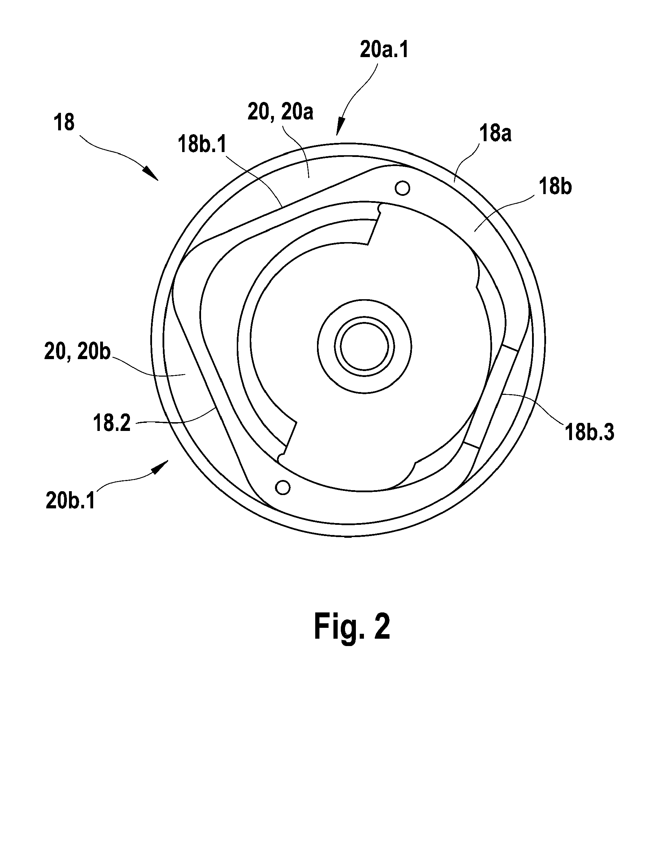

Wie aus Fig. 2 ersichtlich, ist der Kolbenstempel 18 als kompakte Einheit ausgeführt. Der Kolbenstempel 18 umfasst ein Stempelrohr 18a, das beispielsweise als dünnwandiges Stahlrohr ausgeführt ist, und ein innerhalb des Stempelrohres 18a angeordnetes Antriebsgehäuse 18b, welches eine hier nicht dargestellte Antriebseinheit aufnimmt. Die Geometrien des Stempelrohres 18a und des Antriebsgehäuses 18b bilden gemeinsam die beiden Durchflusskanäle 20a und 20b der Durchflusseinrichtung 20. Hierzu ist das Antriebsgehäuse 18b im Wesentlichen zylinderförmig ausgebildet und weist an seinem Umfang vorzugsweise drei Abplattungen 18b.1, 18b.2, 18b.3 auf, die drei ebene Flächen bilden. Wie insbesondere aus Fig. 2 ersichtlich ist, bilden zwei Abplattungen 18b.1, 18b.2 des Antriebsgehäuses 18b im vorliegenden Ausführungsbeispiel zusammen mit dem Stempelrohr 18a die aus freien Querschnitten 20a.1, 20b.1 gebildeten Durchflusskanäle 20a, 20b der Durchflusseinrichtung 20 zum Durchfluss des Dämpferfluids, d.h. die Durchflusskanäle 20a, 20b sind im Wesentlichen zwischen den Abplattungen 18b.1, 18b.2 des Antriebsgehäuses 18b und der Innenwand des Stempelrohres 18a angeordnet. Die dritte Abplattung 18b.3 bildet mit der Innenwand des Stempelrohres 18a im dargestellten Ausführungsbeispiel einen Versorgungskanal, der beispielsweise zur elektrischen Kontaktierung der nicht dargestellten Antriebseinheit verwendet werden kann, wobei die Antriebseinheit beispielsweise als Drehmagnetantrieb ausgeführt sein kann.

Die Durchflusseinrichtung 20 umfasst mindestens eine in eine erste Durchflussrichtung 24 wirkende Zugstufe und/oder mindestens eine in eine zweite Durchflussrichtung 26 wirkende Druckstufe. Im vorliegenden Ausführungsbeispiel wirkt die Zugstufe im Durchflusskanal 20a und die Druckstufe im Durchflusskanal 20b. Die Durchflussrichtung 24, 26 der beiden Durchflusskanäle 20a, 20b ist entgegengesetzt, wobei sich die jeweilige Richtung innerhalb eines Kanals 20a, 20b nicht ändert. Vorzugsweise bildet die Durchflusseinrichtung 20 einen geschlossenen Kreislauf.

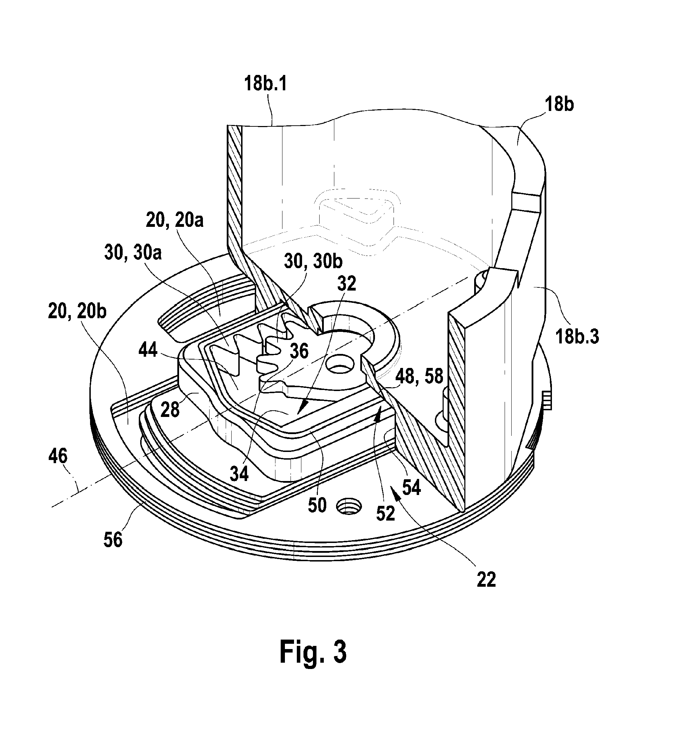

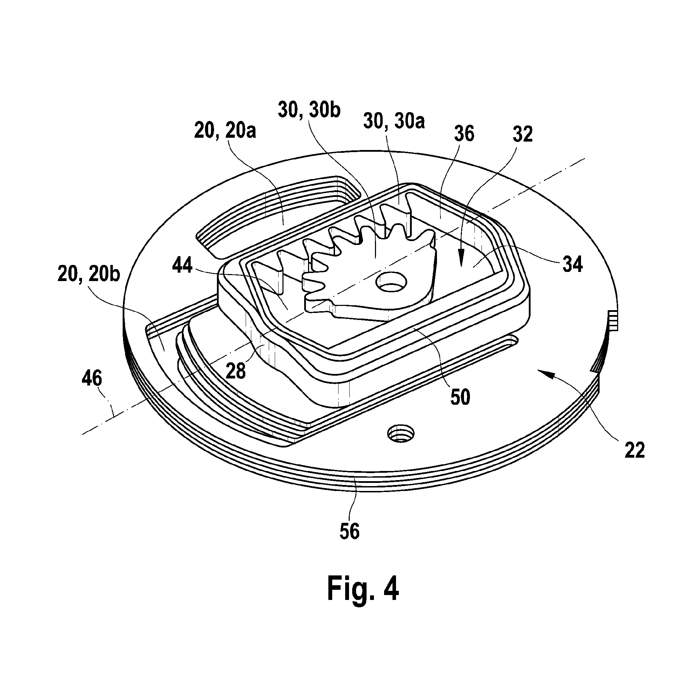

Wie aus den Fig. 3 und 4 ersichtlich, ist innerhalb des Dämpferzylinders 12 eine Verstelleinrichtung 22 zur Regelung des Dämpferfluidstroms in der Durchflusseinrichtung 20 angeordnet. Die Verstelleinrichtung 22 weist eine Federpaketeinheit 56 und eine über der Federpaketeinheit 56 angeordnete, verschiebbare Schiebereinheit 28 auf, welche Mittel 30 zur Umwandlung von Bewegungen umfasst. Die Schiebereinheit 28 schließt sich an das Antriebsgehäuse 18b, bevorzugt an einen geodätisch untenliegenden Bodenbereich des Antriebsgehäuse 18b an. Im vorliegenden Ausführungsbeispiel grenzt die Schiebereinheit 28 unmittelbar an das Antriebsgehäuse 18b bzw. an den Boden 58 des Antriebsgehäuses 18b an. Im vorliegenden Ausführungsbeispiel ist die Schiebereinheit 28 als Verschiebeelement ausgebildet, das in einer im Boden 58 des Antriebsgehäuses 18b ausgebildeten Ausnehmung 54 des Antriebsgehäuses 18b entlang einer Längsachse 46 auf der Federpaketeinheit 56 verschiebbar ist.

Im vorliegenden Ausführungsbeispiel sind die Mittel 30 zur Umwandlung von Bewegungen als Zahnstangensegment 30a ausgebildet, in das ein Zahnradsegment 30b eingreift, welches zur Positionsveränderung der Schiebereinheit 28 von der korrespondierenden, hier nicht dargestellten Antriebseinheit bewegt wird. Im vorliegenden Ausführungsbeispiel wandeln daher die Mittel 30, 30a und 30b eine Rotationsbewegung der Antriebseinheit in eine Translationsbewegung der Schiebereinheit in Richtung der Längsachse 46 um, indem die Antriebseinheit das Zahnradsegment 30b mit einer Rotationsbewegung beaufschlagt, welches in das Zahnstangensegment 30a eingreift und dieses in eine Translationsbewegung versetzt. D.h. zum Verschieben weist die Schiebereinheit 28 das Zahnstangensegment 30a auf, in welches das Zahnradsegment 30b eingreift, das zur Positionsveränderung der Schiebereinheit 28 von der korrespondierenden Antriebseinheit gedreht wird. Im vorliegenden Ausführungsbeispiel ist das Zahnstangensegment 30a vorzugsweise einstückig mit der Schiebereinheit 28 ausgeführt. Zur Einstellung des Dämpferfluidstroms in der Durchflusseinrichtung 20 wird die Verstelleinrichtung 22 aktiviert, indem die Schiebereinheit 28 der Verstelleinrichtung 22 verschoben wird.

Um ein Blockieren der beweglichen Teile bzw. der Mittel 30, 30a, 30b zur Umwandlung von Bewegungen der Verstelleinheit 22 des Dämpfers 10 durch im Dämpferfluidstrom enthaltene Partikel zu verhindern, ist die Schiebereinheit 28 derart ausgeführt, dass eine Trennung von Dämpferfluidstrom und den Mitteln 30, 30a, 30b zur Bewegungsumwandlung erfolgt.

Die als Verschiebeelement ausgebildete Schiebereinheit 28 bildet zusammen mit dem Antriebsgehäuse 18b des Kolbenstempels 18 einen im Wesentlichen geschlossenen Raum 32 aus, der zur Aufnahme der Mittel 30, 30a, 30b zur Umwandlung von Bewegungen dient.

Der Raum 32 weist ein durch einen Boden 34 und eine umlaufende Wandung 36 begrenztes Aufnahmevolumen 44 auf, welches durch einen Deckel 48 abgedeckt wird. Im vorliegenden Ausführungsbeispiel wird das Aufnahmevolumen 44 durch die Schiebereinheit 28 und der Deckel 48 durch das Antriebsgehäuse 18b gebildet. Dies bedeutet, dass der Raum 32 bei abgehobenem Antriebsgehäuse 18b bzw. im demontierten Zustand des Dämpfers 10 nach oben hin offen ausgebildet ist.

Um die Trennung von Dämpferfluidstrom und den Mitteln 30, 30a, 30b zur Bewegungsumwandlung zu vervollkommnen, weist die Verstelleinheit 22 des Dämpfers 10 eine Dichteinheit 50 auf, die zwischen der Schiebereinheit 28 und der Durchflusseinrichtung 20 wirkt. Hierzu ist die Dichteinheit 50 an einer zwischen der Schiebereinheit 28 und dem Antriebsgehäuse 18b verlaufenden Kontaktfläche 52 angeordnet. Vorzugsweise ist die Dichteinheit 50 als umlaufende Dichtung mit einem Dichtelement ausgebildet, wobei selbstverständlich auch mehrere aneinander anschließende Dichtelemente vorgesehen sein können. Die Dichteinheit 50 umfasst mindestens ein Dichtelement, welches an die Schiebereinheit 28 und/oder das Antriebsgehäuse 18b angespritzt ist, und/oder mindestens ein Dichtelement, welches in eine in der Schiebereinheit 28 und/oder in dem Antriebsgehäuse 18b angeordnete Nut eingelegt ist. Bevorzugt umfasst die Dichteinheit 50 mindestens ein aus einem Kunststoff bestehendes Dichtelement, wobei hier vorzugsweise ein Elastomerkunststoff zum Einsatz kommt. Alternativ hierzu kann die Dichteinheit 50 auch mindestens ein Dichtelement aufweisen, bei welchem Bürsten vorgesehen sind.

Im Betrieb beziehungsweise während einer Beanspruchung des Dämpfers 10 strömt durch die in Richtung der Hochachse 42 des Dämpfers 10 bzw. des Dämpferzylinders 12 gerichtete Bewegung der Kolbeneinheit 14 ein Dämpferfluidstrom in der Durchflusseinrichtung 20, wobei der Dämpferfluidstrom und die eventuell in dem Dämpferfluidstrom enthaltenen Partikel an der Schiebereinheit 28 bzw. an den beweglichen Teilen 30, 30a, 30b der Verstelleinheit 22 des Dämpfers 10 vorbeigeführt werden.

## Patentansprüche

1. Dämpfer mit einem Dämpferzylinder (12), einer Kolbeneinheit (14), die einen in dem Dämpferzylinder (12) über eine Kolbenstange (16) geführten Kolbenstempel (18) umfasst, einer innerhalb des Dämpferzylinders (12) angeordneten Durchflusseinrichtung (20) zum Durchfluss eines Dämpferfluidstroms und einer innerhalb des Dämpferzylinders (12) angeordneten Verstelleinrichtung (22) zur Regelung des Dämpferfluidstroms in der Durchflusseinrichtung (20) mit einer Schiebereinheit (28), die Mittel (30, 30a, 30b) zur Umwandlung von Bewegungen umfasst, **dadurch gekennzeichnet, dass** die Schiebereinheit (28) derart ausgeführt ist, dass eine Trennung des Dämpferfluidstroms und den Mitteln (30, 30a, 30b) zur Bewegungsumwandlung erfolgt.

2. Dämpfer nach Anspruch 1, **dadurch gekennzeichnet, dass** die Schiebereinheit (28) mit einem Antriebsgehäuse (18b) des Kolbenstempels (18) einen im Wesentlichen geschlossenen Raum (32) zur Aufnahme der Mittel (30, 30a, 30b) zur Bewegungsumwandlung bildet.

3. Dämpfer nach Anspruch 2, **dadurch gekennzeichnet, dass** der Raum (32) ein durch einen Boden (34) und eine umlaufende Wandung (36) begrenztes Aufnahmevolumen (44) aufweist, welches durch einen Deckel (48) abgedeckt wird.

4. Dämpfer nach Anspruch 3, **dadurch gekennzeichnet, dass** das Aufnahmevolumen (44) mindestens teilweise durch die Schiebereinheit (28) und der Deckel (48) mindestens teilweise durch das Antriebsgehäuse (18b) gebildet ist.

5. Dämpfer nach einem der Ansprüche 1 bis 4, **gekennzeichnet durch** eine Dichteinheit (50), die zwischen der Schiebereinheit (28) und der Durchflusseinrichtung (20) wirkt.

6. Dämpfer nach Anspruch 5, **dadurch gekennzeichnet, dass** die Dichteinheit (50) an einer zwischen der Schiebereinheit (28) und dem Antriebsgehäuse (18b) verlaufenden Kontaktfläche (52) angeordnet ist.

7. Dämpfer nach Anspruch 5 oder 6, **dadurch gekennzeichnet, dass** die Dichteinheit (50) als umlaufende Dichtung ausgeführt ist und mindestens ein Dichtelement umfasst.

8. Dämpfer nach einem der Ansprüche 5 bis 7, **dadurch gekennzeichnet, dass** die Dichteinheit (50) mindestens ein Dichtelement umfasst, welches an die Schiebereinheit (28) und/oder das Antriebsgehäuse (18b) angespritzt und/oder mindestens ein Dichtelement umfasst, welches in eine in der Schiebereinheit (28) und/oder in dem Antriebsgehäuse (18b) angeordnete Nut eingelegt ist.

9. Dämpfer nach einem der Ansprüche 1 bis 8, **dadurch gekennzeichnet, dass** die Schiebereinheit (28) als Verschiebeelement ausgebildet ist, das in einer Ausnehmung (54) des Antriebsgehäuses (18b) verschiebbar geführt ist.

10. Dämpfer nach einem der Ansprüche 1 bis 9, **dadurch gekennzeichnet, dass** die Durchflusseinrichtung (20) einen geschlossenen Kreislauf bildet.
